# DEMANDE DE BREVET EUROPEEN

(11) **EP 1 326 191 A1**
(43) Date de publication de la demande: **09.07.2003**
(21) Numéro de dépôt: 02102880.8
(22) Date de dépôt: 23.12.2002
(51) Int. Cl.: G06F 17/60

(54) **Serveur pour système de téléchargement de morceaux musicaux**

(30) Priorité: 04.01.2002 FR 0200075
(71) Demandeur: Digiplug, 75010 Paris (FR)
(72) Inventeur: Bohbot, Stephane, 75019, PARIS (FR)
(74) Mandataire: Grynwald, Albert

(57) **Abrégé**

L'invention concerne un serveur (24) pour système de téléchargement de morceaux musicaux dans des téléphones portables (10), ces morceaux étant notamment destinés à constituer des alarmes. Le serveur comporte :
- une base de données (27) contenant, en format numérique, des partitions de morceaux musicaux,
- une entrée pour recevoir des morceaux musicaux à comparer aux morceaux contenus dans la base de données, et
- des moyens de comparaison entre les morceaux musicaux d'entrée et les morceaux de musique contenus dans la base de données de façon à fournir un signal de comparaison.

On prévoit de préférence des moyens pour émettre un signal (32) d'autorisation de diffusion quand la comparaison montre que le morceau de musique à l'entrée correspond à un morceau de musique enregistré dans la base de données.

## Description

L'invention est relative à un serveur pour un système de téléchargement de morceaux de musique notamment destinés à constituer des alarmes pour téléphones portables.

De nombreux appareils reproduisent des sons musicaux à partir de signaux numériques représentant des échantillons sonores correspondant à tout ou partie d'une partition musicale. Ces appareils peuvent parfois être reliés par des moyens de transmission à des bases de données informatiques et recevoir de celles-ci des messages codés représentant des partitions musicales. On peut citer les ordinateurs individuels, les synthétiseurs ou analogues, ainsi que les téléphones portables. L'invention sera décrite principalement en référence aux téléphones portables. Elle n'est cependant pas limitée à ces appareils. Elle s'applique de façon générale à la diffusion, par des moyens de télécommunication, sous forme de messages codés (informatique), d'oeuvres musicales donnant lieu à redevance pour la perception de droits d'auteur.

L'usage est maintenant établi dans le domaine des téléphones portables de disposer d'une sonnerie particulière constituée par un bref morceau de musique stocké en mémoire sous forme d'un message numérique binaire constitué d'une suite de codes qui viendront, le moment venu, actionner des générateurs de son contenus dans le téléphone portable.

Il est possible d'obtenir des messages comportant de telles alarmes musicales en appelant, notamment par le téléphone portable, un site distributeur diffusant des morceaux de musique destinés à constituer des alarmes. Il s'agit de morceaux de musique de dimension limitée souvent tirés d'oeuvres donnant lieu à des droits d'auteurs gérés par un organisme de gestion des redevances d'auteur et d'éditeur, ou de morceaux de musique créés spécialement à l'usage des alarmes de téléphones portables et donnant lieu également au paiement de droits d'auteur.

Chaque distributeur dispose en général d'un catalogue particulier d'alarmes musicales. Pour permettre le contrôle du paiement, le distributeur a l'obligation de tenir à la disposition de l'organisme de gestion les références des morceaux diffusés, le prix et le nombre de ventes effectuées.

Cependant le caractère déclaratif des éléments définissant les redevances dues aux auteurs n'est pas satisfaisant, notamment parce qu'il est basé sur la bonne foi du déclarant et des redevances peuvent ne pas être déclarées par négligence. En outre :
les distributeurs ne savent pas toujours si le morceau de musique qu'ils veulent distribuer donne lieu à redevance ;
la consultation de l'organisme de gestion des redevances d'auteur et d'éditeur se révèle fastidieuse pour de petits morceaux donnant lieu à de faibles redevances ; enfin
la recherche de ressemblances entre des arrangements nouveaux et des oeuvres répertoriées peut se révéler difficile.

Un but de l'invention est de remédier à au moins certains de ces inconvénients.

L'invention prévoit, selon un premier de ses aspects, un système d'aide à la gestion du droit d'auteur de morceaux de musique destinés à être chargés dans des téléphones portables, ces morceaux de musique étant notamment à usage d'alarme, ce système comprenant un serveur comportant :
au moins une entrée de réception de morceaux de musique destinés à être téléchargés,
une base de données contenant un ensemble de morceaux de musique enregistrés sous un format standard, par exemple le format MIDI,
des moyens pour comparer les morceaux de musique reçus dans le même format en entrée avec les morceaux emmagasinés dans la base de données, et,
un moyen pour fournir le résultat de la comparaison.

Par exemple, les morceaux de musique de la base de données sont des morceaux de musique pour lesquels les auteurs autorisent la diffusion. Dans ce cas, le résultat de la comparaison peut être utilisé comme certification, c'est-à-dire que, si le morceau de musique reçu correspond à un morceau se trouvant enregistré dans la base de données, le résultat de la comparaison est positif, ce qui permet l'émission par le serveur d'un signal d'autorisation vers l'émetteur ayant fourni un signal de musique à certifier.

Le résultat de la comparaison peut aussi être utilisé pour comptabiliser les redevances dues par l'émetteur, cette comptabilisation étant effectuée dans le serveur qui, dans ce cas, dispose de moyens de connexion vers un autre serveur d'un organisme de gestion des droits d'auteur. Cette connexion vers un serveur d'organisme de gestion est effectuée soit en temps réel, soit en temps différé, de façon périodique ou à la demande du serveur de gestion.

La comparaison effectuée entre partitions codées de façon standard, de préférence selon la norme MIDI, fournit un résultat fiable puisqu'elle compare des contenus de morceaux de musique. En effet, si la comparaison consistait par exemple à vérifier que des titres et/ou des auteurs de morceaux sont bien enregistrés dans la base, cette comparaison ne permettrait pas une certification sûre.

De préférence, les moyens de comparaison comportent des moyens de corrélation entre le morceau de musique à l'entrée du serveur et les divers morceaux de musique en mémoire de la base de données. La comparaison peut indiquer une concordance si le pourcentage de différences entre les morceaux à comparer est inférieur à un seuil prédéterminé, ce seuil étant par exemple fonction de la durée du morceau en entrée ou du nombre de notes qu'il contient, ou encore du tempo (nombre de bits par minute) .

Le seuil de différences entre musiques comparées au-dessous duquel il est estimé que le morceau de musique à l'entrée correspond à un morceau de musique mémorisé est de préférence choisi de façon telle qu'il permette de tenir compte des arrangements du morceau de musique mémorisé.

On notera que le serveur conforme à l'invention nécessite des moyens classiques de corrélation ou de comparaison qui peuvent fonctionner en temps réel en raison du nombre limité de morceaux de musique qu'il est nécessaire d'introduire dans la base de données. On a en effet constaté que les goûts des utilisateurs des services de téléchargement d'alarmes sur téléphones portables portaient ces derniers vers un nombre limité de morceaux de musique.

Dans une réalisation, si le morceau de musique présenté à l'entrée du serveur ne correspond pas à un morceau de musique enregistré dans la base de données, le serveur de certification enregistre ce morceau de musique et/ou le transmet vers un serveur d'organisme de gestion. Ainsi, l'organisme de gestion des droits d'auteur peut vérifier ultérieurement, éventuellement de façon manuelle, si la diffusion du morceau de musique est autorisée. L'organisme gestionnaire du serveur de certification peut aussi être chargé de la vérification "manuelle" qui consiste à reconnaître à l'oreille un morceau et à déterminer si la diffusion est autorisée.

Pour garder la possibilité de certifier les morceaux de musique en temps réel, on prévoit, dans ce cas, de préférence, que le serveur conforme à l'invention fournisse, en temps réel, une autorisation de diffusion à l'émetteur du morceau de musique, cette autorisation n'étant fournie que pour un temps prédéterminé.

Le serveur conforme à l'invention peut aussi être utilisé comme moyen de contrôle. En effet, les données fournies par les émetteurs de morceaux de musique doivent correspondre aux données que le serveur conforme à l'invention peut enregistrer. En outre, le serveur conforme à l'invention comporte des informations sur les morceaux de musique diffusés par l'ensemble des émetteurs ou fournisseurs. Il peut donc fournir des informations de façon aisée sur la diffusion de chaque morceau de musique, compte tenu du fait que plusieurs fournisseurs peuvent distribuer les mêmes morceaux de musique.

Les morceaux de musique distribués par les fournisseurs peuvent être transmis au téléphone portable de diverses manières, soit par la voie de données, soit par mini messages du type SMS ; dans les deux cas, les données ou messages peuvent être codés. On peut également utiliser une transmission WAP ou e-mode. De façon générale, on peut faire appel à tout protocole de transmission de données effectuée par l'intermédiaire de téléphones mobiles.

Ainsi l'invention concerne, de façon générale, un serveur pour système de téléchargement de morceaux musicaux dans des téléphones portables, ces morceaux étant notamment destinés à constituer des alarmes. Ce serveur comporte :
- une base de données contenant, en format numérique, des partitions de morceaux musicaux,
- une entrée pour recevoir des morceaux musicaux à comparer aux morceaux contenus dans la base de données, et
- des moyens de comparaison entre les morceaux musicaux d'entrée et les morceaux de musique contenus dans la base de données de façon à fournir un signal de comparaison.

Dans une réalisation on prévoit des moyens pour émettre un signal d'autorisation de diffusion quand la comparaison montre que le morceau de musique à l'entrée correspond à un morceau de musique enregistré dans la base de données.

Dans ce cas on peut prévoir des moyens pour fournir un signal temporaire d'autorisation de diffusion lorsque le morceau de musique présenté à l'entrée ne correspond pas à un morceau de musique contenu dans la base de données.

Les moyens de comparaison comportent, par exemple, des moyens de corrélation.

Selon une réalisation les moyens de comparaison sont agencés pour fournir un signal indiquant une correspondance entre le morceau de musique à l'entrée et un morceau de musique dans la base de données quand le taux de dissemblances entre les deux morceaux est inférieur à un seuil prédéterminé.

Les morceaux musicaux d'entrée et dans la base de données sont de préférence en format MIDI.

Dans un mode de réalisation le serveur caractérisé en ce qu'il comporte une mémoire pour mémoriser des morceaux de musique reçus et ne correspondant pas à un morceau de musique dans la base de données.

Selon une réalisation le serveur comporte : des moyens pour associer une signature numérique à chaque morceau de musique quand la comparaison montre que le morceau de musique à l'entrée correspond à un morceau de musique enregistré dans la base de données, des moyens pour conserver cette signature dans la base de données, et des moyens pour l'envoyer vers un fournisseur de morceaux musicaux.

Dans ce cas le serveur peut comporter :
- des moyens de comparaison entre les signatures numériques des morceaux musicaux d'entrée et les signatures numériques des divers morceaux contenus dans la base de données, et
- des moyens pour émettre un signal d'autorisation de diffusion quand la signature numérique du morceau d'entrée est identique à la signature numérique d'un morceau contenu dans la base de données.

Le serveur comporte, dans un mode de réalisation, une sortie pour délivrer un signal d'information vers un serveur de gestion de droits d'auteur relatifs aux morceaux musicaux de la base de données.

Le serveur peut comporter des moyens de comptabilisation et/ou mémorisation de morceaux musicaux présentés à son entrée.

Dans ce cas, les moyens de comptabilisation et/ou mémorisation (34) comportent, par exemple, des moyens pour identifier par un code chaque morceau musical.

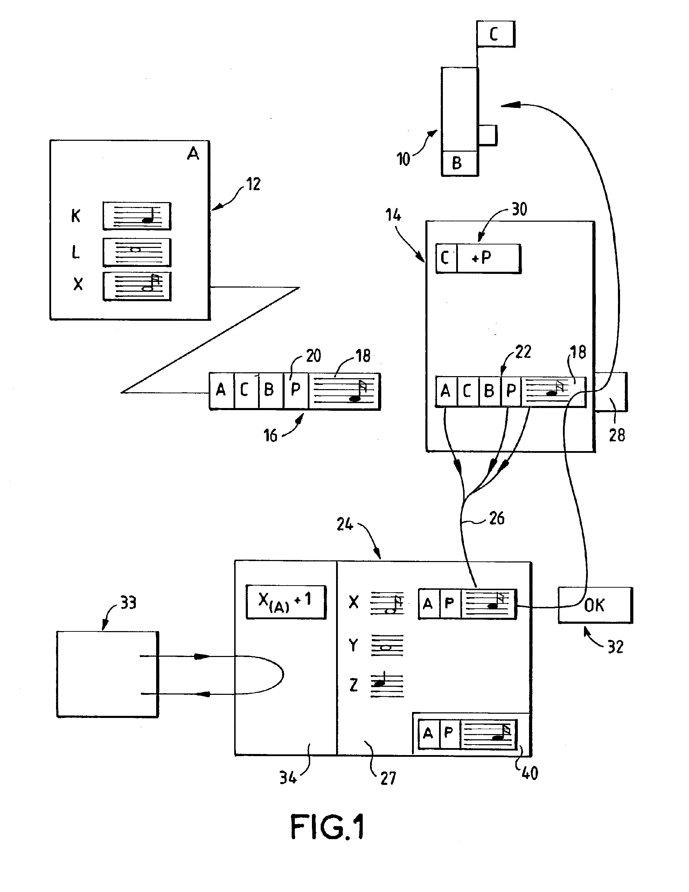

D'autres caractéristiques et avantages de l'invention apparaîtront avec la description de certains de ses modes de réalisation, celle-ci étant effectuée en se référant au dessin ci-annexé sur lequel la figure 1 est un schéma d'un système de télécommunication faisant appel au procédé et au serveur selon l'invention.

Dans le système de télécommunication représenté sur la figure 1, un téléphone portable 10 de type B ayant comme numéro d'appel C envoie à un distributeur 12 ayant un numéro A, une demande de mise en place d'une alarme ou sonnerie musicale de référence X. Le numéro A identifiant le distributeur est, bien entendu, unique.

Le distributeur 12 envoie à un serveur 14 opérateur, qui gère le téléphone portable de numéro d'appel C, un message 16 comportant les informations A, B et C ainsi que le prix 20, ici de valeur P et, dans une partie 18, la sonnerie musicale en codage MIDI. L'opérateur retient provisoirement en 22 ces informations en attendant l'accord du serveur de certification 24 qu'il interroge par un message 26 comportant l'information musicale en codage MIDI, ainsi que les informations A et P.

Le serveur de certification 24 comporte une base de données 27 ainsi que des moyens de comparaison, sous forme de programme, ces moyens comparent les morceaux de musique de la base de données 27 qui sont, comme ceux transmis par le serveur 14, codés en format MIDI avec le contenu du morceau du message 26. Si la comparaison, sous la forme d'une corrélation, indique une dissemblance inférieure à un certain pourcentage, un message (OK)32 d'acceptation est envoyé au serveur 14 qui poursuit l'opération en envoyant la partie musique selon un code plus compact que le codage MIDI grâce à un logiciel de compression 28. Le serveur 14 incrémente aussi le compte 30 de facturation du téléphone portable de numéro d'appel C de la valeur P correspondant au prix de chargement et d'utilisation de la sonnerie musicale.

Le téléphone portable reçoit le message de sonnerie musicale sous forme compressée qui est transformé en codage MIDI par un logiciel de décompression.

Parallèlement, le serveur de certification incrémente d'une unité le nombre d'unités vendues de la sonnerie X en caractérisant la transaction par la date et la référence du distributeur.

Un ordinateur ou serveur 33 d'un organisme de gestion des redevances d'auteurs et d'éditeurs peut à tout instant interroger une partie comptable 34 du serveur 24 de certification.

Etant donné que la base de données 27 contient un nombre limité de morceaux de musique en mémoire, par exemple de l'ordre de 5 000, la corrélation entre le morceau de musique du message 26 envoyé par le serveur 14 vers le serveur 24 et les morceaux en mémoire peut s'effectuer en un temps limité, au maximum de l'ordre de quelques secondes ou moins. Ainsi, après certification, c'est-à-dire envoi du signal 32, le morceau 26 peut être téléchargé dans une mémoire du téléphone portable 10. Ces opérations s'effectuent donc en temps réel, une durée de quelques secondes séparant la demande de chargement de sonnerie de l'exécution de l'ordre.

Le pourcentage de dissemblances admis dans la corrélation permet de tenir compte des arrangements de morceaux de musique.

Etant donné que la base de données 27 n'est pas exhaustive, notamment parce qu'elle peut être remplie avec un certain retard par rapport aux modifications des contenus des serveurs 12 de fournisseurs, dans l'exemple, quand la corrélation ne permet pas d'identifier que le morceau du message 26 correspond à un morceau dans la base 27, le serveur 24 envoie un message 32 qui est une autorisation temporaire de diffusion du morceau de message 26 et, en même temps, ce morceau est stocké en mémoire 40 du serveur 24 pour être adressé, soit de façon manuelle, soit de façon automatique, par des moyens de télécommunication au serveur 33 de l'organisme de gestion qui peut alors effectuer une comparaison avec un stock plus important de morceaux de musique.

L'organisme de gestion profite ainsi du délai, par exemple de l'ordre de huit jours, d'autorisation temporaire pour vérifier que la diffusion est autorisée.

Dans une variante, l'organisme gestionnaire du serveur 24 dispose de spécialistes pour identifier les morceaux ne se trouvant pas encore dans la base.

La facturation des droits d'auteur s'effectue de préférence directement par le fournisseur titulaire du serveur de distribution 12 par l'intermédiaire du serveur 14 de l'opérateur grâce à la mémoire de comptabilisation 30. Dans ce cas, la partie de comptabilité 34 du serveur 24 est utilisée par le serveur 33 à des fins de vérification et/ou de statistiques. En particulier, cette partie pourra fournir le nombre total de morceaux de musique téléchargés pendant une période donnée et, pour chaque morceau de musique, elle pourra fournir le nombre de téléchargements au cours de cette période.

Dans une variante, le serveur 24 reçoit l'ensemble des informations A, C, B et P.

Selon encore une autre variante, la comparaison entre le fichier MIDI reçu du fournisseur 12 et les fichiers MIDI contenus dans la base de données 27 du serveur 24 est effectuée une seule fois lors d'une procédure unique de certification. Ainsi, dans cette variante, lorsque le distributeur 12 acquiert un nouveau morceau de musique, il le transmet pour certification au serveur 24. Si le morceau de musique est reconnu, alors le serveur 24 renvoie le morceau de musique avec une signature numérique, constituant une certification, inséparable du fichier MIDI.

Il n'est pas indispensable que cette certification s'effectue aussi rapidement que dans la première réalisation puisque, dans cette seconde réalisation, il s'agit d'une précertification qui n'est pas obligatoirement effectuée en temps réel.

Ensuite, quand le distributeur 12 désire diffuser, vers un téléphone portable, ce morceau de musique ainsi doté d'une signature numérique, la signature numérique de ce morceau est comparée aux signatures numériques des divers morceaux se trouvant dans la base 27. Cette variante permet donc une vérification encore plus rapide des morceaux de musique diffusés et/ou permet l'utilisation de moyens de calcul moins importants que dans la première réalisation pour laquelle une comparaison entre fichiers MIDI est effectuée lors de chaque diffusion.

Il est à noter que, dans la base 27, en plus des diverses informations mentionnées ci-dessus, dans une réalisation, on prévoit d'associer à chaque morceau au moins une des données suivantes : un titre, un auteur, un compositeur, un interprète, un label et une information sur les droits associés. Par "droits associés", on entend des éventuelles limitations aux droits d'auteurs, telles qu'une limitation temporelle de diffusion ou une exclusivité pour certains distributeurs.

## Revendications

1. Serveur pour système de téléchargement de morceaux musicaux dans des téléphones portables, ces morceaux étant notamment destinés à constituer des alarmes, **caractérisé en ce qu'**il comporte :
- une base de données (27) contenant, en format numérique, des partitions de morceaux musicaux,
- une entrée pour recevoir des morceaux musicaux à comparer aux morceaux contenus dans la base de données, et
- des moyens de comparaison entre les morceaux musicaux d'entrée et les morceaux de musique contenus dans la base de données de façon à fournir un signal de comparaison.

2. Serveur selon la revendication 1 **caractérisé en ce qu'**il comporte des moyens pour émettre un signal (32) d'autorisation de diffusion quand la comparaison montre que le morceau de musique à l'entrée correspond à un morceau de musique enregistré dans la base de données.

3. Serveur selon la revendication 2, **caractérisé en ce qu'**il comporte des moyens pour fournir un signal temporaire d'autorisation de diffusion lorsque le morceau de musique présenté à l'entrée ne correspond pas à un morceau de musique contenu dans la base de données.

4. Serveur selon la revendication 1, 2 ou 3, **caractérisé en ce que** les moyens de comparaison comportent des moyens de corrélation.

5. Serveur selon l'une des revendications 1 à 4, **caractérisé en ce que** les moyens de comparaison sont agencés pour fournir un signal indiquant une correspondance entre le morceau de musique à l'entrée et un morceau de musique dans la base de données quand le taux de dissemblances entre les deux morceaux est inférieur à un seuil prédéterminé.

6. Serveur selon l'une des revendications précédentes **caractérisé en ce que** les morceaux musicaux d'entrée et dans la base de données sont en format MIDI.

7. Serveur selon l'une des revendications précédentes **caractérisé en ce qu'**il comporte une mémoire (40) pour mémoriser des morceaux de musique reçus et ne correspondant pas à un morceau de musique dans la base de données.

8. Serveur selon la revendication 1 ou 2, **caractérisé en ce qu'**il comporte des moyens pour associer une signature numérique à chaque morceau de musique quand la comparaison montre que le morceau de musique à l'entrée correspond à un morceau de musique enregistré dans la base de données, des moyens pour conserver cette signature dans la base de données et des moyens pour l'envoyer vers un fournisseur de morceaux musicaux.

9. Serveur selon la revendication 8, **caractérisé en ce qu'**il comporte :
- des moyens de comparaison entre les signatures numériques des morceaux musicaux d'entrée et les signatures numériques des divers morceaux contenus dans la base de données, et
- des moyens pour émettre un signal d'autorisation de diffusion quand la signature numérique du morceau d'entrée est identique à la signature numérique d'un morceau contenu dans la base de données.

10. Serveur selon l'une des revendications précédentes **caractérisé en ce qu'**il comporte une sortie pour délivrer un signal d'information vers un serveur (33) de gestion de droits d'auteur relatifs aux morceaux musicaux de la base de données.

11. Serveur selon l'une des revendications précédentes **caractérisé en ce qu'**il comporte des moyens de comptabilisation et/ou mémorisation (34) de morceaux musicaux présentés à son entrée.

12. Serveur selon la revendication 11, **caractérisé en ce que** les moyens de comptabilisation et/ou mémorisation (34) comportent des moyens pour identifier par un code chaque morceau musical.
